# EUROPEAN PATENT SPECIFICATION

(11) **EP 1 370 502 B1**
(45) Date of publication and mention of the grant of the patent: **16.05.2007**
(21) Application number: 02700949.7
(22) Date of filing: 27.02.2002
(51) Int. Cl.: C04B 22/16, C04B 28/02

(54) **FINISHING MORTAR FOR SOUND-ABSORBING AND FIRE-RESISTING COATING**
FEINMÖRTEL FÜR SCHALLABSORBIERENDE UND FLAMMFESTE BESCHICHTUNG
MORTIER DE FINITION POUR REVETEMENT INSONORISANT ET RESISTANT AU FEU

(30) Priority: 28.02.2001 SE 0100664
(43) Date of publication of application: 17.12.2003
(73) Proprietor: Fellert, John, 502 55 Boras (SE)
(72) Inventor: BERGLUND, Paul, S-540 63 Bor s (SE)
(74) Representative: Bergquist, Kjell Gunnar
(86) International application number: PCT/SE2002/000330
(87) International publication number: WO 2002/068359

(56) References cited:
- WO-A1-98/27027
- DE-A- 2 252 488
- DE-A1- 19 541 626
- FR-A1- 2 681 856
- US-A- 5 719 200
- DATABASE WPI Week 198643, Derwent Publications Ltd., London, GB; AN 1986-283910, XP002972919 & SU 1 216 170 A (GOSSTROI CONS PHYS) 07 March 1986
- DATABASE WPI Week 198245, Derwent Publications Ltd., London, GB; AN 1982-96855E, XP002972918 & SU 895 968 A (STONE SILICATES RES) 07 January 1982
- DATABASE WPI Week 198329, Derwent Publications Ltd., London, GB; AN 1983-714612, XP002972920 & JP 58 099 157 A (DAINIPPON INK & CHEM KK) 13 June 1983
- DATABASE WPI Week 198124, Derwent Publications Ltd., London, GB; AN 1981-43157D, XP002972921 & JP 56 045 879 A (OTSUKA KAGAKU YAKUHIN KK) 25 April 1981
- DATABASE WPI Week 198221, Derwent Publications Ltd., London, GB; AN 1982-42181E, XP002972922 & JP 57 061 793 A (MOGAMI DENKI KK ET AL.) 14 April 1982

## Description

### TECHNICAL FIELD:

The present invention relates to a finishing mortar for sound-absorbing and flame-retarding coating of inner walls, ceilings and the like in buildings. The mortar may be applied either directly on concrete or some other load-supporting material, but may also be coated onto underlying sound-absorbing materials such as mineral wool, polyester materials, board materials, and glass granulate.

### PRIOR ART:

Different buildings are constructed in different ways. They are large or small and made up of such materials as stone, concrete, brick, wood, etc. resulting in different strength, heat insulation ability and sound absorption ability and inflammability in walls, floors, and ceilings. In buildings where the heat insulation ability and sound absorption ability are unsatisfactory, walls and ceilings may be coated with further materials to improve these unsatisfactory properties. Often the ceiling is lowered and the walls are expanded, e.g. with cross bars, and covered with a sound-absorbing material. The material often consists of wood-fiber boards, minarite boards and gypsum, and the insulation may consist of various porous materials such as mineral wool.

The work of improving buildings in this regard is often expensive and although the materials used in the renovation may be good as such, they are often unsatisfactory in certain aspects, in particular with regard to sound absorption ability and flame resistance.

The known acoustic mortars used commercially on the market in several countries may generally be divided into two types. One type consists of mineral ballast bound by organic paint. Fully mineral mortars, mainly gypsum and expanding materials, constitute the other type.

### TECHNICAL PROBLEM:

It has long been a problem during construction and renovation of buildings to be able to furnish buildings and line ceilings in such a way that sound absorption and flame resistance become satisfactory while simultaneously obtaining an esthetically pleasing surface. This has often, particularly in office buildings, conference halls, meeting halls and the like, led to a non-uniform lining of the walls since the acoustics from certain walls must be different than that from other walls and the like. The Swedish patent document 513941 describes the problems of the known coatings and discloses a new finishing mortar for sound-absorbing coatings containing, among other things, cotton fiber and expanding materials such as perlite.

The problem with the above-mentioned acoustic mortar consisting of mineral ballast bound by organic paint is that, in order to obtain acoustic capability, it is necessary to achieve cavities between the grains intended to give the mortar suitable air flow-resistance. In practice, it has proven to give very insecure results since the craftsmen make the mortar floatate, i.e., the organic paint or the binder forms an airtight coating making the mortar useless as acoustic mortar, even in combination with underlying absorbents, the ability of which is then blocked at the surface. Field measurements have shown that in most cases only 30 - 35% of the stated acoustic absorption is obtained.

These mortars are also characterized in that they are hard and brittle which makes them sensitive towards crack formation caused by mechanical and thermal motions in the construction.

Also, they cannot be invisibly mended or patched, which necessitates treatment of the whole surface, which in turn further deteriorates the ability to absorb sound. They cannot be treated mechanically to obtain smoother surfaces and they are characterized by a grainy texture. Also, it is not possible to post-treat them without losing most of the acoustic absorption capability, and, further, these mortars cannot be coated onto absorbents of lower density, such as mineral wool.

The fully mineral mortars, consisting foremost of gypsum and expanding minerals, are depending for their acoustic absorption capability on fine continuous air inclusions, giving the bulk a suitable air flow-resi stance. Even these mortars have turned out to possess too tight characteristics, and hence cannot be subjected to any post-treatment compressing the mortar paste. An acoustic comparison to optimal stated factory data for such gypsum-based mortar and those for Fellert acoustic mortar according to the Swedish patent 513941 indicated that, for the gypsum-based, in the interval 250 - 4000 Hz, the mean practical absorption factor was 0.4 for a 20 mm mortar thickness on a solid substrate. For the Fellert acoustic mortar, in the interval 250 - 4000 Hz, the mean practical absorption factor was 0.41 at half that thickness, i.e., 10 mm. These data applied to mortar applied to a solid substrate. These mortars, too, are brittle and sensitive to motion, they also cannot be patched invisibly, and they cannot be post-treated without losing most of the acoustic absorption capability. Further, they cannot be applied to absorbents with lower density, such as mineral wool.

Thus, it has been a long-standing desire to be able to achieve finishing mortar, which, after application to a surface, has better sound-absorbing and flame-retarding properties, and which may be treated after application without giving rise to the above-mentioned drawbacks.

### THE SOLUTION:

It has therefore been achieved, according to the present invention, a finishing mortar for sound-absorbing and flame-retarding coating of inner walls, ceilings and the like in buildings, either directly on concrete or other load-supporting material, or other underlying insulation material such as mineral wool containing cellulose fibers and expanded material, which mortar is characterized in that it further contains bentonite, ammonium polyphosphate, and water glass and that the expanding material and the cellulose fibers together constitute 60-80% of the composition, preferably approximately 67%, the ammonium polyphosphate constitutes 10-15%, preferably 13%, the bentonite also constitutes 10-15%, preferably 13%, and the water glass constitutes 5-10%, preferably 7% of the composition. These percentages are based on the dry powdery and fibrous constituents without added water.

According to the invention, the cellulose fibers should consist mainly of cotton and the expanding material of perlite.

The finishing mortar according to the present invention has a gel-like thixotropic consistency.

### DETAILED DESCRIPTION OF THE INVENTION:

The dry constituents according to the present invention are mixed thoroughly and a suitable amount of water is added so that they may be applied to a substrate, e.g., through spraying, coating, or by other means. The resulting water suspension may also contain other materials such as mica, biolite, etc., and the cellulose fibers, constituted mainly by cotton fibers, may in some cases consist mainly of cellulose fibers, e.g., from conifers. Since the organic content of the finishing composition has been strongly reduced compared to known finishing mortars, longer cotton fibers are preferably added, reinforcing the mortar, so that a smaller amount of binder is sufficient.

The flame-retarding characteristics of the coating produced with the finishing mortar according to the present invention are extremely improved, such that they pass the most difficult fire tests that a surface layer can be subjected to, when the mortar is applied to a low-density glass wool board, which glass wool does not absorb surplus heat from a fire but rather reflects heat, allowing very rapid buildup of heat during fire. The flame-retarding characteristics are generally very good. These flame-retarding characteristics mainly depend on the content of bentonite, which is a silicate, and water glass, which is sodium silicate. Apart from flame protection, these substances also contribute other desirable characteristics, such as giving the mortar paste a thixotropic gel-like consistency, endowing improved adhesion. The adhesion of the dry mortar paste is also improved. This is the case also after a full fire. The mortar paste may also be pumped, which is advantageous during handling.

The thixotropy makes coloration of the mortar safer, since the water-born pigments will not migrate differently during varying absorption from different substrates. This phenomenon can be studied clearly on a brick surface finished with cement mortar. If such a surface is covered with a lime-cement paint, the pattern of stones and seams will appear due to varying absorption below the cement mortar.

Further, the finishing mortar dries more evenly across the whole surface. The previously mentioned perlite finishing mortar according to the Swedish patent 513941 had a tendency to retain the water content poorly. A certain separation could occur, so that surplus water migrated downwards and, if a wall was coated with thicker finishing, the surface became considerably damper for a longer period of time at the bottom. The new finishing mortar acccording to the present invention retains an equal amount of moisture and starts to dry equally across the whole surface.

The new finishing mortar dries faster, which is important when the material is applied during contract work, where various activities must be synchronized in time. The new finishing mortar according to the present invention obtains an even higher acoustic sound absorption since it obtains lower air flow-resistance after drying. This makes it so safe to handle that a function warranty may be given to the contractors.

## Claims

1. A finishing mortar for sound-absorbing and flame-retarding coating of inner walls, ceilings, and the like in buildings, either directly on concrete or other load-supporting material or underlying insulating material, such as mineral wool containing cellulose fibers and expanded material **characterized in that** it further contains bentonite, ammonium polyphosphate and water glass, whereby the cellulose fibers and the expanding material together constitute 60-80% of the composition, preferably 67%,
the ammonium polyphosphate 10-15%, preferably 13%,
the bentonite 10-15%, preferably 13%, and
the water glass 5-10%, preferably 7 % of the composition.

2. A finishing mortar according to claim 1, **characterized in that** the cellulose fibers are constituted mainly by cotton and the expanding material by perlite.

3. A finishing mortar according to any of claims 1-2, **characterized in that** the mortar has a gel-like thixotropic consistence.

## Patentansprüche

1. Feinmörtel für einen schallabsorbierenden und flammenhemmenden Verputz von Innenwänden, Decken und dergleichen in Gebäuden, entweder direkt auf Beton oder einem anderen lasttragenden Material oder darunterliegenden Dämmstoff, wie Mineralwolle, die Zellulosefasern und expandiertes Material enthält, **dadurch gekennzeichnet, daß** er ferner Bentonit, Ammoniumpolyphosphat und Wasserglas enthält, wodurch die Zellulosefasern und das expandierende Material zusammen 60-80% der Zusammensetzung, vorzugsweise 67%,
das Ammoniumpolyphosphat 10-15%, vorzugsweise 13%,
das Bentonit 10-15%, vorzugsweise 13%, und
das Wasserglas 5-10%, vorzugsweise 7% der Zusammensetzung ausmachen.

2. Feinmörtel nach Anspruch 1, **dadurch gekennzeichnet, daß** die Zellulosefasern hauptsächlich durch Baumwolle und das expandierende Material durch Perlit gebildet werden.

3. Feinmörtel nach einem der Ansprüche 1-2, **dadurch gekennzeichnet, daß** der Mörtel eine gelförmige thixotropische Beschaffenheit aufweist.

## Revendications

1. Mortier de finition pour revêtement insonorisant et résistant au feu de parois internes, plafonds, et analogues dans des bâtiments, soit directement sur le béton soit sur un matériau de support de charge ou un matériau sous-jacent isolant tel que de la laine minérale contenant des fibres de cellulose et du matériau expansé,
**caractérisé en ce qu'**il comprend de plus de la bentonite, du polyphosphate d'ammonium et du verre soluble, de telle sorte que les fibres de cellulose et le matériau expansé constituent ensemble 60-80 % de la composition, de préférence 67 %,
le polyphosphate d'ammonium 10-15 %, de préférence 13 %,
la bentonite 10-15 %, de préférence 13 %, et
le verre soluble 5-10 %, de préférence 7 % de la composition.

2. Mortier de finition selon la revendication 1,
**caractérisé en ce que** les fibres de cellulose sont principalement constituées de coton et le matériau expansé de perlite.

3. Mortier de finition selon l'une quelconque des revendications 1-2,
**caractérisé en ce que** le mortier a une consistance thixotropique de type gel.
